# EUROPEAN PATENT SPECIFICATION

(11) **EP 2 579 122 B1**
(45) Date of publication and mention of the grant of the patent: **19.02.2014**
(21) Application number: 11184391.8
(22) Date of filing: 07.10.2011
(51) Int. Cl.: G06F 1/16

(54) **Notification device**
Benachrichtigungsvorrichtung
Dispositif de notification

(43) Date of publication of application: 10.04.2013
(73) Proprietor: BlackBerry Limited, Waterloo, ON N2K 0A7 (CA)
(72) Inventor: Hill, Samuel Aaron, Lafayette, IN Indiana 47909 (US); Hill, Thomas Casey, Crystal Lake, IL Illinois 60014 (US)
(74) Representative: Noble, Nicholas

(56) References cited:
- EP-A1- 2 051 154
- WO-A1-2011/041727

## Description

### FIELD OF TECHNOLOGY

The present disclosure relates generally to electronic devices and more specifically to a notification device for an electronic device, where the notification device can provide notification of information received by the electronic device.

### BACKGROUND

With the advent of more robust electronic systems, advancements of electronic devices are becoming more prevalent. Electronic devices can provide a variety of functions including, for example, telephonic, audio/video, and gaming functions. Electronic devices can include mobile stations such as cellular telephones, smart telephones, portable gaming systems, portable audio and video players, electronic writing or typing tablets, mobile messaging devices, personal digital assistants, and portable computers (such as tablet computers or laptop computers). Some of the electronic devices (including those just listed) can be portable, that is, readily transportable from place to place. Some of the electronic devices can be handheld, that is, sized and shaped to be held or carried in a human hand. Additionally, as electronic devices advance, so must the accessories that accommodate the electronic devices.

WO 2011/041727 details a protective case for a wireless electronics device that includes one or more output devices integrated with or bonded to the protective case, from which a perceivable output (e.g., visible or audible indication) is generated for indicating incoming message ID or content. Various other electronics (e.g., circuit elements, ICs, microcontrollers, sensors) also may be integrated with or bonded to the protective case to provide power and/or one or more output signals to control the output device(s). In one example, a wireless signal generated by the wireless device is sensed by the integrated electronics, and the output device(s) are controlled based on the detected wireless signal. The protective case may be substantially rigid or at least partially deformable (flexible and/or stretchable), and the integrated electronics similarly may be at least partially deformable such that they may conform with various contours of the protective case and remain operative notwithstanding flexing and/or stretching of the case.

EP 2051154 details a handheld electronic device that includes a first battery and a holster that includes a second battery and a charging apparatus. When the handheld electronic device and the holster are electrically connected together, the charging apparatus charges the first battery on the handheld electronic device from the second battery on the holster when the first battery charge has been depleted to a given level and the second battery charge is above a second given level. Alternatively, if the first battery charge is above a third given level the first battery charges the second battery if the second battery is not fully charged. The holster further includes a microcontroller that communicates with a microprocessor on the handheld electronic device to identify alerts and activate a notification device powered by the second battery on the holster.

The invention is set out in the claims.

### BRIEF DESCRIPTION OF THE DRAWINGS

Examples of the present application will now be described, by way of example only, with reference to the attached Figures, wherein:
Figure 1 is a front view of an exemplary electronic device associated with a notification device in accordance with an example;
Figure 2 is a perspective view of the electronic device illustrated in Figure 1 housed in a notification device in accordance with an example;
Figure 3 is a side view of the notification device illustrated in Figure 2, wherein a side of the notification device has been cutaway;
Figure 4 is a front view of the notification device illustrated in Figure 2, illustrating the an electronic device coupler of the notification device coupled to the electronic device housed therein;
Figure 5 is a top view of a notification device in accordance with an example of the present technology, wherein a flap portion of the notification device is in a first configuration displaying a first message;
Figure 6 is a top view of the notification device illustrated in Figure 5, wherein the flap portion of the notification device is in a second configuration displaying a second message;
Figure 7 is a perspective view of the notification device illustrated in Figure 6 illustrating the orientation of the flap portion with respect to an enclosing portion of the notification device;
Figure 8 is a perspective view of the notification device illustrated in Figure 5, wherein the flap portion is in a third configuration;
Figure 9 is a perspective view of a notification device in accordance with another example of the present technology, wherein the notification device include a plurality of light emitting diodes;
Figure 10 is a top view of a notification device in accordance with a third example of the present technology, wherein the notification device includes a wristwatch;
Figure 11 is an illustration of the notification device illustrated in Figure 10 in communication with an electronic device placed in the pocket of a user;
Figure 12 is a perspective view of a notification device in accordance with a fourth example of the present technology, wherein the notification device includes a computing device carrier; and
Figure 13 is a perspective view of the notification device illustrated in Figure 12 illustrating the electronic device coupler coupled to a computing device housed in the computing device carrier.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the examples described herein. However, it will be understood by those of ordinary skill in the art that the examples described herein can be practiced without these specific details. In other instances, methods, procedures and components have not been described in detail so as not to obscure the related relevant feature being described. Also, the description is not to be considered as limiting the scope of the examples described herein.

Several definitions that apply throughout this document will now be presented. The phrase "communicatively coupled" is defined as connected, whether directly or indirectly through intervening components and is not necessarily limited to physical connections. The term "electronic device" is defined as any electronic device that is capable of at least accepting information entries or commands from a user. An "electronic device" generally includes its own power source (such as a rechargeable battery), although in some examples, an "electronic device" may receive power from an external source, such as an adapter or a charger.

The present disclosure relates to an electronic notification device that is configured to provide notifications of messages received by an electronic device electronically coupled to the electronic notification device. The electronic notification device can include an exterior facing display screen and an electronic device coupler. The electronic device coupler can be configured to electronically couple the display screen to the electronic device. The electronic device coupler can provide at least data to the display screen from the electronic device. The screen can be configured to display a notification of receipt of a message. For example, a message associated with the electronic device. In at least one example, the electronic notification device can include a holster. Although various more specific examples may be described or claimed herein, the term "holster" is used herein for convenience, and may include a variety of devices that receive, hold or carry electronic devices, including a conventional holster, a briefcase, a laptop bag, a backpack, a laptop sleeve, an electronic pad cover, a carrying case, a handbag, or other carrier. In a typical illustrative example, the electronic notification device can include a mobile phone holster, that is, a holster that is sized and shaped to receive, hold or carry a mobile phone. The holster can include a flexible display screen. In some examples, an electronic notification device need not include a holster, need not receive, hold or carry electronic devices, Although many described examples of holsters may enclose an electronic device (which includes but is not limited to totally enclosing the electronic device) some concepts may be applied beyond holsters, In a typical example to be discussed below, an electronic notification device may be wrist-mounted (what will be referred to for convenience as a wristwatch, since it may be conveniently applied with conventional wristwatch functions), while the electronic device may be carried by a conventional holster, a pocket, or some other carrier. Other configurations and arrangements will be described below in relation to illustrated examples. One of ordinary skill would appreciate that the elements from the illustrated examples can be optionally included, combined, omitted, and arranged in various combinations to achieve the described benefits of the presently disclosed notification device.

Electronic devices can include a light emitting source, for example, a display screen, a light indicator, a light emitting diode, light bulb, a cathode ray tube, or other light emitting source. The light emitting source can be configured to display message, images, graphical images, or other visual notifications. Additionally, the light emitting source can emit light to provide notification signals, indicative of an incoming message, incoming information, received information, or other information received by the electronic device. When the electronic device resides in a conventional holster (for example, a holster, a purse, a pocket, a briefcase, or other holster), the display screen of the electronic device and light emitting sources of the electronic device are typically at least partially obstructed. As the display screen and light emitting sources are obstructed, the user can be prevented from receiving the visual notifications of an incoming message. In other words, when the electronic device resides in a conventional holster, visual notifications emitted from the light source may not be visible. As the visual notifications may not be visible through the holster, a user can miss incoming messages or can fail to receive a contemporaneous notification of the incoming message when it is received by the electronic device residing in the holster. An electronic notification device in accordance with the present disclosure can provide a notification of messages received by an electronic device which is stored or otherwise obstructed such that a user cannot view the visual notifications of the electronic device.

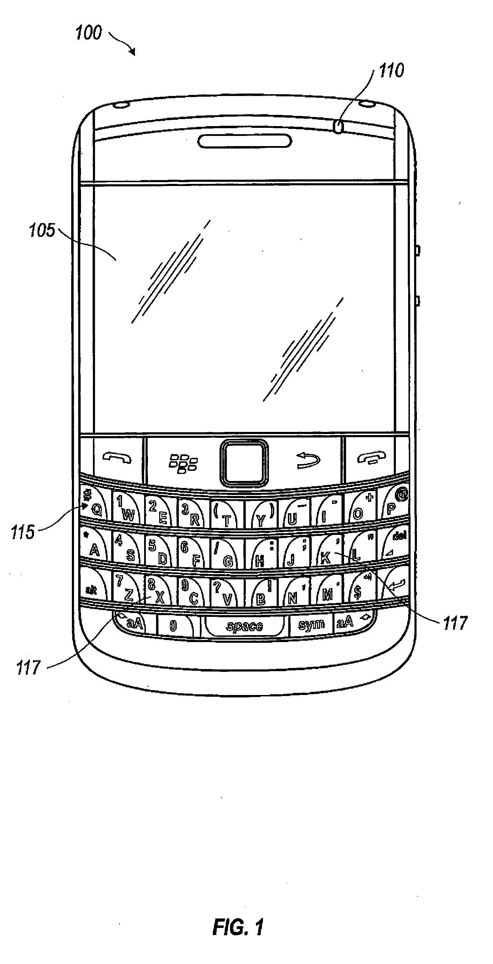

Figure 1 is a perspective view of the front of an exemplary electronic device 100 that can be electronically coupled and/or communicatively coupled to the electronic device of the present disclosure. In general, two elements are communicatively coupled when one can communicate with the other. The communication may be, but need not be, two-way. Elements may be communicatively coupled by, for example, a wireless radio channel, an optical channel, or an electrically conductive path, or an optical cable path. While the components of Figure 1 are not all inclusive, Figure 1 illustrates components that can be included on an electronic device 100 for a notification device according to the present disclosure. Additional components are required to allow the mobile device 100 to function, but have been omitted for brevity and clarity. Figure 1 illustrates an electronic device 100 that is a mobile phone. However, those of ordinary skill in the art will appreciate that the electronic device 100 can also be an electronic pad, a portable computing device, a personal digital assistant, a mobile navigation device, a laptop, a gaming device, a mobile messaging device, or other electronic device that can receive messages or information and transmit a notification signal indicative of the received message or information.

The illustrated electronic device 100 has a plurality of light sources. In Figure 1, the light sources can include, for example, a display screen 105, an indicator light 110, and a keyboard 115. The display screen 105 can be a liquid crystal display (LCD), a light-emitting diode (LED) display, an active matrix organic light-emitting diode (LED) display, an active matrix organic light-emitting diode (AMOLED) display, a plasma display, or other display screen which can emit light and display visual information thereon. The indicator light 110 can be a light-emitting diode, a plurality of light-emitting diodes, and organize light-emitting diode, a quantum dot, an electron stimulated luminescence (ESL) lamp, a cathode ray tube, an electroluminescent wire, a solid state lighting element, or other light-emitting element which can provide visual notifications (for example, a blinking light, a flashing light, a light that can vary in brightness, or other visible notifications utilizing light).

The keyboard 115 can be an illuminable keyboard 115 comprising a plurality of illuminable keys 117. The keyboard 115 can be a full keyboard 115, having twenty-six keys 117 each associated with an alphabetic indicia, as illustrated in Figure 1. Alternatively, the keyboard 115 can be a reduced keyboard, where at least one key 117 is associated with more than one alphabetic indicia. The keys 117 can be illuminable press-actuable keys, illuminable touch-sensitive keys, illuminable capacitive keys, or other similar illuminable key that allows for the input of data to a processor of the electronic device 100 upon user-engagement with the key 117. While Figure 1 illustrates three light sources 105, 110, 115, those of ordinary skill in the art will appreciate that the electronic device 100 can include fewer or more light sources than illustrated, so long as the electronic device 100 includes at least one light source adapted to emit light when communicatively coupled to the electronic device 100. Those of skill in the art will also appreciate that light sources other than a display 105, an indicator light 110, and an illuminable keyboard 115 can be implemented. For example, other light sources can include an illuminable navigation tool, an illuminable function key, or other light source which can be communicatively coupled to the electronic device 100 and emit light.

The light source 105, 110, 115 can emit light to provide a user with visual notifications. The visual notifications can be an incoming message received by the electronic device 100. For example, the incoming message can be an email, a text message, a voice call, an instant message, a meeting notification, an alarm, an alarm clock, or any other message which the user of the electronic device 100 can be made aware of by a visual notification. The visual notifications can also be a new message(s), unread messages, read messages, missed calls, new voicemails, saved voicemails, or other messages which may be represented by a visual notification.

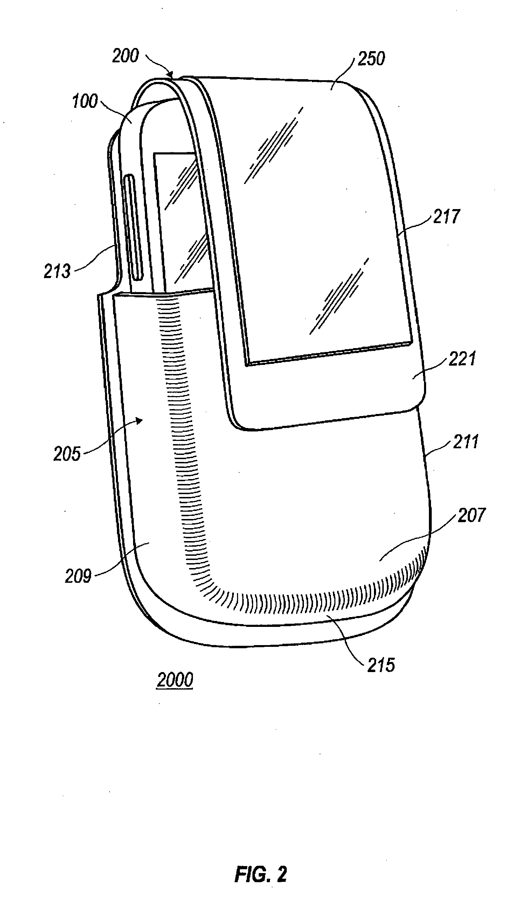

Figures 2-4 illustrate an example of an electronic notification device 200 having an electronic device 100 residing therein. Figure 2 is a perspective view of the electronic notification device 200. As illustrated in Figure 2, the electronic notification device 200 is a holster. However, the electronic notification device 200 can also be a briefcase, a laptop bag, a handbag, a backpack, an electronic pad cover, a laptop sleeve, a wristwatch, or other carrier which can be coupled to a flexible display screen. In some examples, the electronic notification device 200 can be a carrier which can hold or retain an electronic device and which can be coupled to a display screen communicatively coupled to the electronic device. The electronic notification device 200 illustrated in Figure 2 can include an enclosing portion 205. For example, the enclosing portion 205. In at least one example, the enclosing portion can have a front side 207, a bottom side 215, a first side (e.g., left side 209), a second side (e.g. right side 211), and a rear side 213. Also, illustrated in Figure 2, the front side portion 207, bottom side portion 215, left side portion 209, right side portion 211, and rear side portion 213 are coupled to one another to form the enclosing portion 205. For example, the enclosing portion 205 can be a pouch, a pocket, or other portion which can receive an electronic device 100. The enclosing portion 205 can be formed from one piece of material or can be formed of multiple pieces of material.

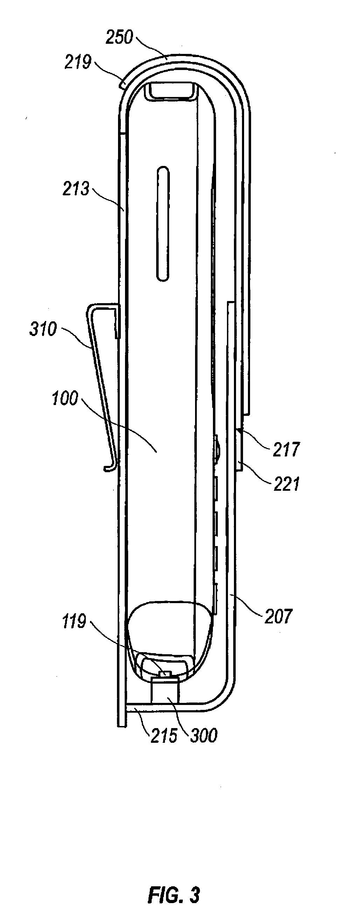

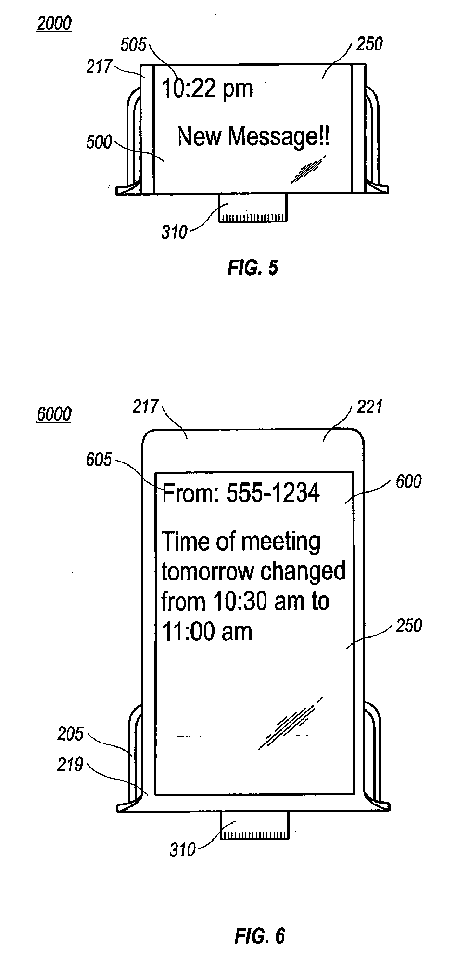

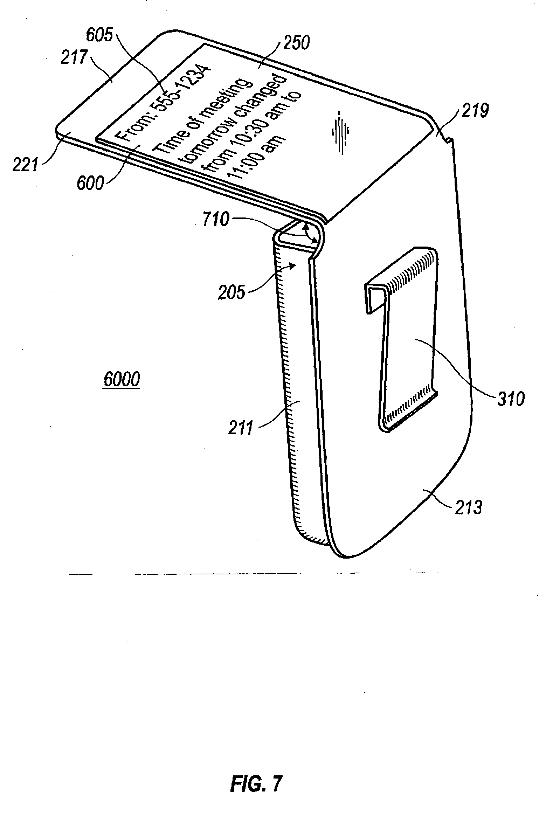

Also illustrated in Figure 2, the notification device 200 can include a flap portion 217. The flap portion 217 can include a first end 219 and a second end 221 (shown in Figure 3). The first end 219 can be coupled to the rear side portion 213 of the enclosing portion 205. The second end 221 can be releasably coupled to the front side portion 207. The flap portion 217 can be moveable between two positions: a first position 2000 (as shown in Figure 2) in which the flap portion 217 is coupled to both the front side portion 207 and the rear side portion 213, and a second position 6000 (show in Figures 6 and 7) in which the flap portion 217 is coupled only to the rear side portion 213 of the enclosing portion 205. For example the first position 2000 can be a closed position, in which the flap portion 217 is coupled to the front side portion 207, thereby securing an electronic device 100 residing in the enclosing portion 205. The second position 6000 can be an open position in which the flap portion 217 is released from the front side portion 207, thereby enabling the electronic device 100 to be removed from the enclosing portion 205.

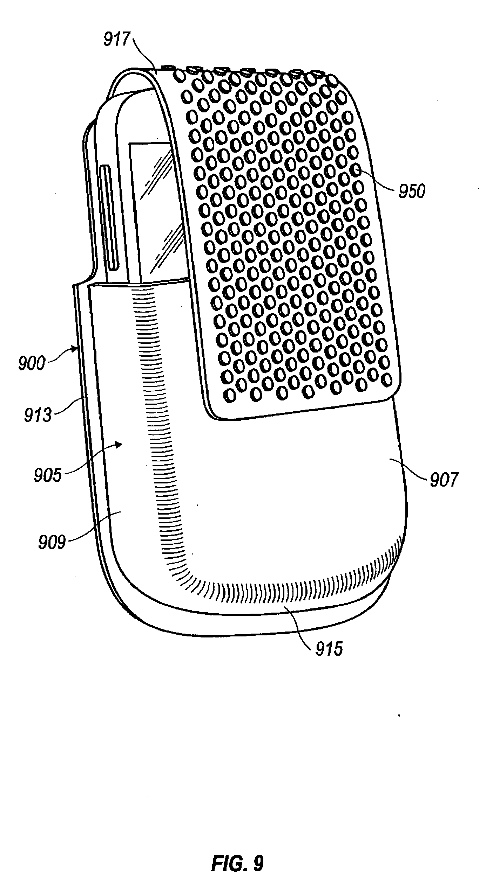

Also illustrated in Figure 2, the electronic notification device 200 can include a flexible exterior facing display screen 250. The flexible exterior facing display screen 250 can cover a majority of the flap portion 217. For example, the flexible display screen 250 can cover approximately half of the flap portion 217, approximately three-quarters of the flap portion 217, one-quarter of the flap portion 217, ninety-five percent of the flap portion 217, the entirety of the flap portion 217, or any other amount of the flap portion 217 such that the flexible display screen 250 is large enough for a user to read notifications displayed on the display screen 250. The flexible exterior facing display 250 can be a flexible light emitting diode screen (LED), a flexible active matrix organic light emitting diode (AMOLED) screen, a flexible organic light emitting diode screen (OLED), a flexible liquid crystal display (LCD), a plurality of LEDs arranged in an array (shown in Figure 9), a flexible substrate on which more than one transistor is placed thereon, an electronic paper display, or other display screen which can be coupled to the notification device 200 to display information such as notification messages.

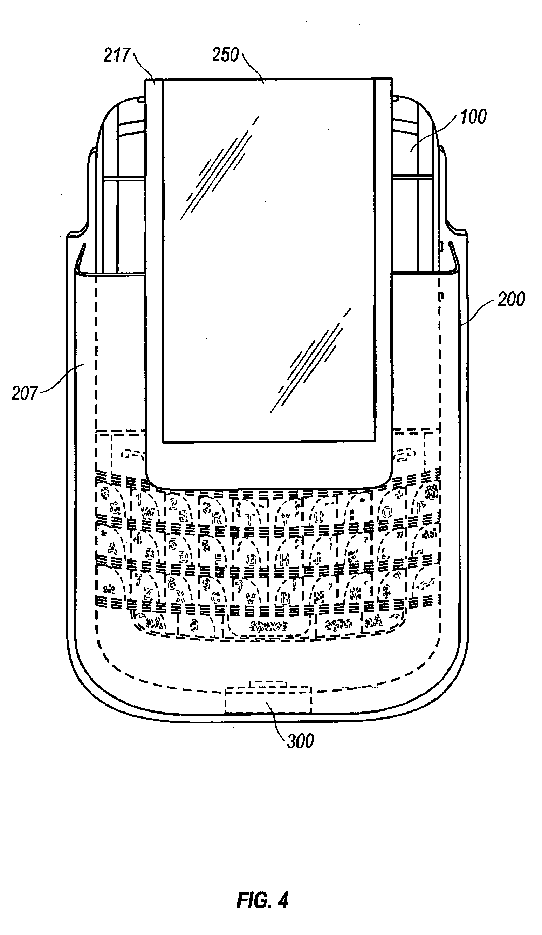

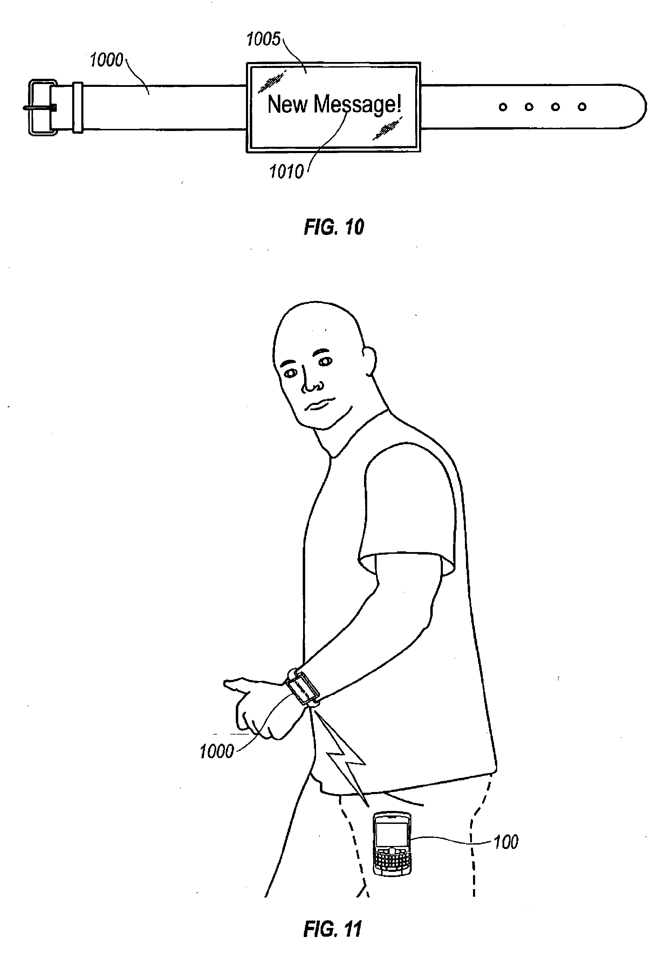

The electronic notification device 200 can include an electronic device coupler 300 (shown in Figure 3). Figures 3 and 4 illustrate the electronic device coupler 300 more clearly. Figure 3 is a side view of the electronic notification device 200 wherein a left side portion 209 of the notification device 200 has been cutaway to expose the coupling between the notification device 200 and the electronic device 100 residing therein. Figure 4 is a front view of the electronic notification device 200 illustrating a front view of the coupling between the notification device 200 and the electronic device 100 residing therein, wherein the electronic device 100 is shown in phantom lines. The electronic device coupler 300 can be configured to electrically couple the flexible display screen 250 to the electronic device 100 inserted or residing in the enclosing portion 205. The electronic device coupler 300 can provide power to the flexible display screen 250 from the electronic device 100. In another example, the electronic device coupler 300 can provide data to the flexible display screen 250 from the electronic device 100. In other examples, the electronic device coupler 300 can provide both data and power to the flexible display screen 250 from the electronic device 100. In Figures 3 and 4, the electronic device coupler 300 is coupled to the bottom side portion 215 of the enclosing portion 205. However, in other examples, the electronic device coupler 300 can be coupled to other portions of the enclosing portion 205. In Figures 3 and 4, the electronic device coupler 300 is a male power adapter configured for mating engagement with a female power receiver 119 of the electronic device 100. For example, the electronic device coupler 300 can be a male USB device configured for mating engagement with a female USB device 119 of the electronic device 100. In other examples, the electronic device coupler 300 can be a contact pad, an induction coupler, a conductive charging pad, a High-Definition Multimedia Interface (HDMI) connector, an inductive charging pad, or other electronic device coupler which can provide data, power, or both from the electronic device 100 to the flexible display screen 250. In another example, an interior surface of the enclosing portion 205 can include a conductive coil (not shown) communicatively coupled to the flexible display screen 250, wherein, in the event an electronic device 100 is inserted into the enclosing portion 205, the conductive coil can generate power to be delivered to the flexible display screen 250 to power the flexible display screen. In another example, at least one of the portions 207, 209, 211, 213, 215 of the enclosing portion 205 can include a wireless charging pad configured to provide power to the flexible display screen 250 from the electronic device 100. As the flexible display screen 250 can receive power from the electronic device 100 inserted into the enclosing portion 205, an independent power source for the flexible display screen 250 is not necessary. In such an example, as one power source is required to power the flexible display screen 250 and the electronic device 100, power is efficiently utilized. When the electronic device 100 is inserted into the enclosing portion 205 and electrically coupled to the flexible display screen 250, the display screen of the electronic device 100 can be powered down, and the power that would have been otherwise used to power the display screen of the electronic device 100 can be used to power the flexible display screen 250. Thus, no additional power is consumed to power the flexible display screen 250. However, in other examples, the flexible display screen 250 can receive power from an independent power source electrically coupled to the electronic notification device 200 but not to the electronic device 100. Further details as to an independent power source electrically coupled to the electronic notification device 200 will be discussed in relation to Figure 10.

Also illustrated in Figure 3 is a securement member 310. The securement member 310 can be coupled to one of the portions of the notification device 200. For example, in Figure 3, the securement member 310 is coupled to an exterior of the rear side portion 213 of the notification device 200. In other examples, the securement member 310 can be coupled to an interior or exterior surface of other portions (for example, a front side portion 207, a flap portion 217, a left side portion 209, a right side portion 211, or other portion) of the notification device 210. In Figure 3, the securement member 310 is a belt clip. The belt clip can allow for the securement of the notification device 200 to a waistband or belt of a user. In other examples, the securement member 310 can be a strap, a belt loop, a chain, a rotatable or otherwise adjustable clasp, or other securement member coupled to the notification device 200 which allows the notification device 200 to be secured to the user or carried by the user.

Figure 5 illustrates a top view of the flap portion 217 of the electronic notification device 200 in which the flexible display screen 250 can display a notification 505 of a message received by the electronic device 100. For example, in Figure 5, the notification device 200 is clipped to a user's waist, and the view illustrated in Figure 5 is of the top of the flap portion 217 when the user looks down to the notification device 200 on his waist. When a message is received by the electronic device 100 when the electronic device 100 is coupled to the notification device 200 (for example, when the electronic device resides in the enclosing portion 205 of the notification device), a signal can be sent to the flexible display screen 250 to display the notification 505 that the message has been received by the electronic device. For example, the signal may be sent from a data port 119 of the electronic device 100 to a data port of the flexible display screen 250. In Figure 5, the signal that a message has been received by the electronic device 100 can be transmitted to the flexible display screen 250 via the electronic device coupler 300. In other examples, the signal can be transmitted from the electronic device 100 to the flexible display screen 250 via a blue tooth connection, a near field communication connection, a wireless connection, a Wi-Fi connection, or other electronic communication that enables information associated with the electronic device 100 to be transmitted to the flexible display screen 250 of the notification device 200.

Figures 5-7 also illustrate an example of an electronic notification device 200 in which the flexible display screen has a first power configuration (shown in Figure 5) and a second power configuration (shown in Figures 6 and 7). The first power configuration can correspond to the first position 2000 of the flap portion 217. The second power configuration can correspond to the second position 6000 of the flap portion 217. In one example, the first power configuration can provide power to only a portion of the flexible display screen 250. In the second power configuration can provide power to an entirety of the flexible display screen 250. For example, when the flap portion 217 is in the first position 2000, wherein the electronic device 100 is secured within the enclosing portion 205, and a message is received by the electronic device 100, the flexible display screen 250 can be placed in the first power configuration where a first portion 500 of the flexible display screen 250 is powered. In this first power configuration, the flexible display screen 250 can be configured to display a notification 505 indicative of a received message by the electronic device 100, as illustrated in Figure 5. For example, the notification 505 can be indicative of an incoming call, a voicemail, an email, a text message, a photo, or other message received by the electronic device 100. In one example, the notification 505 can include a time and a type of message received, an indication of a number of emails received, a name or a phone number associated with the message received, a name and/or phone number of an incoming call, a subject line of a message received by the electronic device 100, a number of missed calls, a number of voicemail message, or any other notification 505 associated with the message received by the electronic device 100.

When the notification 505 is received, the flap portion 217 can be placed in the second position 6000, illustrated in Figures 6 and 7, and the flexible display screen 250 can be placed in the second power configuration in which the entirety 600 of the flexible display screen 250 is powered. In this second power configuration, a detailed view 605 of the message can be displayed on the flexible display screen 250. For example, the detailed view can be a body of an email or a text message, a portion of an email or a text message, a subject line of a text message, a call log of missed calls received by the electronic device 100, a photo or other multimedia message received by the electronic device 100, or any other detailed portion of the message.

For example, in Figures 5 and 6, the notification device 200 can be clipped to the waistband or belt of the user. For example, in Figures 5 and 6, the notification device 200 is can be clipped to the user by a belt clip 310. When the user views the notification 500 when the flap portion 217 is in the first position, the user can then release the flap portion 217 from the front side portion 207. In one example, the user can lift the flap portion 217 from the front side portion 207 of the enclosing portion 205 such that the flap portion 217 forms an angle 710 with respect to the rear side portion 213 of the enclosing portion, as illustrated in Figure 7. For example, the flap portion 217 can be lifted for forming substantially a ninety degree angle, a sixty degree angle, a forty-five degree angle or any other angle greater than zero with respect to the rear side portion 213. When the flap portion 217 is listed from the front side portion 207 to place the flap portion in the second position 6000 and in the second power configuration can view a detailed view 605 of the message received by the electronic device 100. That is, the notification device 200 can provide the user with a notification 505 that the electronic device 100 coupled to the notification device 200 has received a message. The user can then manipulate the notification device 200 (for example, by placing the flap portion 207 in a second position) to view a detailed view 605 of the message received by the electronic device 100. With the notification device 200 illustrated in Figure 2-7, even though the electronic device 100 is inserted into the enclosing portion 205 and even though the display screen and visual indicators of the electronic device 100 are obstructed while the electronic device 100 resides in the enclosing portion 205, the user can still receive notifications at the notification device 200 that the electronic device 100 has received a message. Thus, with the notification device 200, the user is less likely to miss messages, incoming calls, or other information received by the electronic device.

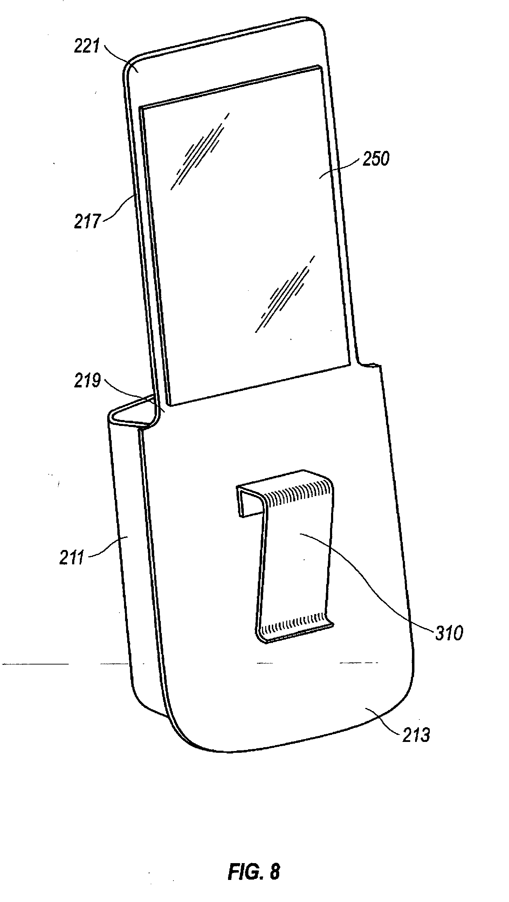

Figure 8 illustrates the exemplary notification device 200 illustrated in Figures 2-7, wherein the flap portion 217 is positioned with respect to the rear side portion 213 such that the flap portion 217 forms an angle of approximately one-hundred-eighty degrees with the rear side portion 213. For example, the flap portion 217 has been positioned such that the flap portion 217 is co-linear with the rear side portion 213. In Figure 8, the flexible display screen 250 can be placed in a third power configuration associated with this position where the flap portion 217 is co-linear with the rear side portion 213. In this third power configuration, the flexible display screen 250 can be powered down. For example, no power can be transmitted to the flexible display screen. When the flap portion 217 is positioned such that the flap portion 217 is co-linear with the rear side surface 213, the electronic device 100 can be removed from the enclosing portion 205.

Figure 9 is another example of the notification device 200 as illustrated in Figures 2-8, except that the flexible display screen 250 is a plurality of light emitting diodes 950. In Figure 9, the light emitting diodes 950 can be selectively powered or illuminated to provide notifications to the user of messages received by the electronic device 100 coupled to and/or residing in the enclosing portion 205 of the notification device 200. For example, a portion of light emitting diodes 950 can be illuminated to spell the words "new messages." In another example, a portion of light emitting diodes 950 can be illuminated to spell the name of the sender of the new message.

Figures 10 and 11 illustrate another example of a notification device in accordance with the present disclosure. Figures 10 and 11 illustrate a notification device 1000 which includes a wristwatch 1000. Figure 10 is a top view of the notification device 1000. As illustrated in Figure 10, the notification device 1000 is a wristwatch and includes a flexible display screen 1005 coupled thereto. The flexible display screen 1005 can be electrically coupled to a power source (not shown) of the wristwatch. That is, the flexible display screen 1005 can be independently powered. As the electronic flexible display screen 1005 can be independently powered, the notification device 1000 can be placed remote from the electronic device 100 and still display notifications 1010 associated with the electronic device 100. In another example, the flexible display screen 1005 can be solar powered. In Figure 10, the wristwatch 1000 can be a digital watch. The wristwatch 1000 can display the time when not showing a notification message(s).

In Figure 10, the flexible display screen 1005 can be configured to display messages or notifications 1010 of messages received by an electronic device 100 coupled to the notification device 1000. For example, in Figure 11, an electronic device 100 that is a smartphone is coupled to the notification device 1000. The electronic device 100 can be stored in the pocket of a user, where notifications received by the user cannot be viewed by the user when received. The notification device 1000 provides a means for notifying the user that the stored electronic device 100 has received a message. For example, a signal can be sent from the electronic device 100 to the notification device 1000 when a message is received by the electronic device 100. The signal can be transmitted via a Bluetooth connection, a near field communication connection, a wireless connection, a Wi-Fi connection, or any other connection which indirectly couples the flexible display screen 1005 to the electronic device 100. The signal can include instructions to display a notification 1010 on the flexible display screen 1005 which can notify the user that a message has been received by the electronic device 100. For example, similar to the example illustrated in Figures 5-7, the notification 1010 can be indicative of an incoming call, a voicemail, an email, a text message, a photo, or other message received by the electronic device 100. In one example, the notification 1010 can include a time and a type of message received. In another example, the notification 1010 can include an indication of a number of emails received, a name or a phone number associated with the message received, a name and/or phone number of an incoming call, a subject line of a message received by the electronic device 100, a number of missed calls, a number of voicemail message, or any other notification 1010 associated with the message received by the electronic device 100. Although, not illustrated, the notification device 1000 can include a switch or button which may be actuated by the user to display a detailed view of the message on the flexible display screen 1005 when the user views the notification 1010. In Figures 10 and 11, even though the electronic device 100 is stored, the user can still receive notifications at the notification device 1000 that the electronic device 100 has received a message. Thus, with the notification device 1000, the user is less likely to miss messages, incoming calls, or other information received by the electronic device.

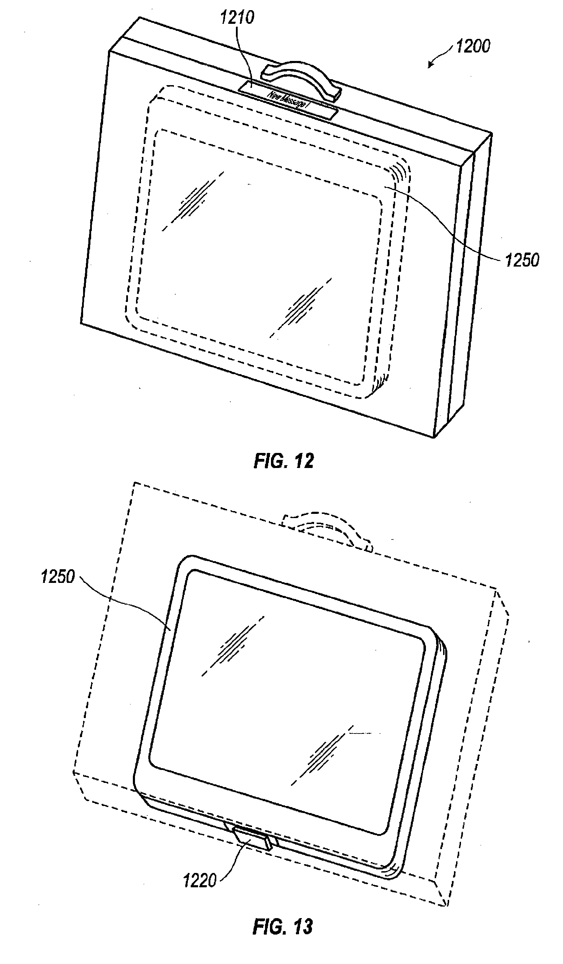

Figures 12 and 13 illustrate yet another example of the notification device. Figures 12 and 13 illustrated a notification device 1200 that includes a briefcase. The briefcase includes a flexible display screen 1210 coupled to a side of the briefcase. As illustrated in Figures 12 and 13, a computing device 1250 resides in the briefcase. For example, the computing device 1250 can be a portable computer, a laptop, a netbook, an electronic pad, or other electronic device which can be inserted into a briefcase. As illustrated in Figure 13, when the computing device 1250 resides in the briefcase, the computing device 1250 can be electrically coupled to an electronic device coupler 1220 of the notification device 1200. Similar to the electronic device coupler of the examples illustrated in Figures 2-8, the electronic device coupler 1220 illustrated in Figure 13 can provide at least power from the computing device 1250 to the flexible display screen 1210. In other examples, the electronic device coupler 1220 can provide data from the computing device 1250 to the flexible display screen 1210. In other examples, the electronic device coupler 1220 can provide both power and data from the computing device 1250 to the flexible display screen. In Figures 12 and 13, when the computing device 1250 receives a message, for example, an email, while the computing device 1250 resides in the briefcase, a signal can be sent from the computing device 1250 to the flexible display screen 1210 to display a notification that a message has been received by the computing device 1250. Thus, even though the computing device 1250 is stored in the briefcase, the user can receive indications or notifications at the notification device 1200 that the computing device 1250 has received a message or other information. While Figures 12 and 13 illustrate a notification device 1200 that includes a briefcase, those of ordinary skill in the art will appreciate that the notification device 1200 can include a backpack, a laptop back, a laptop sleeve, or a handbag.

In any of the examples disclosed herein and illustrated in Figures 2-13, the notification device 200, 1000, 1200 can include more than one flexible display screen 250, 1005, 1210. For example, one flexible display screen can display a notification of receipt of a message by the electronic device 100, 1250, and another one of the more than one flexible display screen 250, 1005, 1210 can display a detailed view of the message received by the electronic device 100, 1250. For example, in an example where the notification device 200 includes a mobile device holster, a first flexible display screen can be coupled to a top portion of the mobile device holster which can be viewed by the user when the holster is clipped to the user's waist or belt. The first flexible display screen can display a notification of a receipt of a message by the electronic device. A second flexible display screen can be coupled to a side portion of the mobile device holster, the side portion being longer in length than the top portion. The second flexible display screen can be configured to display a detailed view of the message received by the electronic device. For example, when a notification is displayed on the first display screen, the user can rotate the holster to view the second screen. The second flexible display screen can be powered on to display the detailed view when the user rotates the mobile device holster about the waist clip or belt clip.

Implementation of one or more examples may realize one or more advantages, some of which have been mentioned already. The concepts described herein can be flexibly adapted for a variety of devices, carriers and usages. The ways in which the described apparatus may be put to use are countless, and users may benefit from enhanced convenience and functionality. Some of the examples can be implemented at little cost in terms of size or weight, which may be important for portability,

Examples have been described hereinabove regarding a notification device. One of ordinary skill in the art will also appreciate that the elements and features illustrated in the examples described and illustrated in the figures herein can be optionally included to achieve the benefits of the presently disclosed notification device. Additionally, those skilled in the art will appreciate that features in each of the figures described herein can be combined with one another and arrange to achieve the described benefits of the presently disclosed notification device. Various modifications to and departures from the disclosed examples will occur to those having skill in the art.

## Claims

1. A notification device comprising:
an enclosing portion (205) having a front side portion (207), a bottom side portion (215), a left side portion (209), a right side portion (211), and a rear side portion (213);
a flexible exterior facing display screen (250) covering a majority of one of the front side portion (207), the bottom side portion (215), the left side portion (209), the right side portion (211), and the rear side portion (213);
an electronic device coupler (300) configured to electrically couple the flexible display screen (250) to an electronic device (100) inserted into the enclosing portion (205), wherein the electronic device coupler (300) provides at least one of power and data to the flexible display screen (250) from the electronic device (100), in the event the electronic device (100) resides in the enclosing portion (205); and
the flexible display screen (250) being movable between a first position and a second position with respect to the enclosing portion, the flexible display screen (250) being configured to:
display, when the flexible display screen (250) is in the first position (2000), a notification (505) of receipt of a message by the electronic device (100); and
display, when the flexible display screen (250) is in the second position (6000), a detailed view (605) of the message.

2. The notification device of claim 1, wherein the electronic device coupler (300) provides both power and data to the flexible display screen (250) from the electronic device (100).

3. The notification device as recited in any one of the preceding claims, wherein the flexible display screen (250) is one of a flexible light emitting diode screen, a flexible liquid crystal display, a flexible substrate on which more than one transistor is placed, and an electronic paper display.

4. The notification device as recited in any one of the preceding claims, wherein the flexible display screen (250) has a first power configuration corresponding to the first position (2000) of the flexible display screen (250) and configured to power only a portion of the flexible display screen (250) and a second power configuration wherein an entirety of the flexible display screen (250) is powered.

5. The notification device as recited in any one of the preceding claims, further comprising a flap portion (217) having a first end coupled to the rear side portion (213) and a second end releasably coupled to the front side portion (207), and wherein the flexible display screen (250) is configured to be powered down in the event the flap portion (217) is positioned co-linearly with the rear side portion (213).

6. The notification device as recited in any one of the preceding claims, wherein the notification (505) includes a time and a type of message received.

7. The notification device as recited in any one of the preceding claims, wherein the notification (505) includes an indication of an unread message.

8. The notification device as recited in any one of the preceding claims, wherein the electronic device coupler (300) is one of an induction coupler, a conductive contact pad, and a USB connector.

9. The notification device as recited in any one of the preceding claims, wherein the electronic device coupler (300) is a charging pad coupled to one of the front side portion (207), the bottom side portion (215), the left side portion (209), the right side portion (211), and the rear side portion (213).

10. The notification device as recited in any one of the preceding claims, wherein the electronic device coupler (300) includes two couplers, one being for power and the other for data.

11. The notification device of claim 10, wherein:
the electronic device coupler for power is one of an induction coupler, a conductive contact pad, and a USB connector; and
the electronic device coupler for data is one of a Bluetooth connector, a Wi-Fi connector, and a near field communication connector.

12. The notification device as recited in any one of claims 1 to 4, further comprising a flap portion (217) having a first end coupled to the rear side portion (213) and a second end releasably coupled to the front side portion (207), and wherein the flexible display screen (250) comprises more than one flexible display screen, wherein one of the flexible display screens (250) is coupled to the flap portion (217) and another one of the flexible display screens is coupled to one of the front side portion (207), the bottom side portion (215), the left side portion (209), the right side portion (211), and the rear side portion (213), each of the flexible display screens being configured to display at least one of a notification (505) of receipt of a message and a detailed view (605) of the message.

13. The notification device as recited in any one of claims 1 to 4, the notification device further comprising:
a flap portion (217) having a first end coupled to the rear side portion (213) and a second end (221) releasably coupled to the front side portion (207), wherein
the flexible display screen (250) is coupled to the flap portion (217), and
the flap portion (217) is moveable between the first position (2000) in which the flap portion (217) is coupled to both the front side portion (207) and the rear side portion (213) and the second position (6000) in which the flap portion (217) is coupled only to the rear side portion (213) and the flap portion forms an angle with the rear side portion (213).

## Patentansprüche

1. Eine Benachrichtigungsvorrichtung, die aufweist:
einen umhüllenden Teil (205) mit einem Vorderseitenteil (207), einem Unterseitenteil (215), einem linken Seitenteil (209), einem rechten Seitenteil (211) und einem Rückseitenteil (213);
einen flexiblen, nach außen zeigenden Anzeigebildschirm (250), der einen Großteil eines des Vorderseitenteils (207), des Unterseitenteils (215), des linken Seitenteils (209), des rechten Seitenteils (211) und des Rückseitenteils (213) abdeckt;
einen "elektronische Vorrichtung"-Koppler (300), der konfiguriert ist zum elektrischen Koppeln des flexiblen Anzeigebildschirms (250) mit einer elektronischen Vorrichtung (100), die in den umhüllenden Teil (205) eingefügt ist, wobei der "elektronische Vorrichtung"-Koppler (300) zumindest eines aus Leistung und Daten an den flexiblen Anzeigebildschirm (250) von der elektronischen Vorrichtung (100) liefert, in dem Fall, in dem sich die elektronische Vorrichtung (100) in dem umhüllenden Teil (205) befindet; und
wobei der flexible Anzeigebildschirm (250) zwischen einer ersten Position und einer zweiten Position in Bezug auf den umhüllenden Teil bewegbar ist,
wobei der flexible Anzeigebildschirm (250) konfiguriert ist zum:
Anzeigen, wenn der flexible Anzeigebildschirm (250) in der ersten Position (2000) ist, einer Benachrichtigung (505) über einen Empfang einer Nachricht durch die elektronische Vorrichtung (100); und
Anzeigen, wenn der flexible Anzeigebildschirm (250) in der zweiten Position (6000) ist, einer detaillierten Ansicht (605) der Nachricht.

2. Die Benachrichtigungsvorrichtung gemäß Anspruch 1, wobei der "elektronische Vorrichtung"-Koppler (300) sowohl Leistung als auch Daten von der elektronischen Vorrichtung (100) an den flexiblen Anzeigebildschirm (250) liefert.

3. Die Benachrichtigungsvorrichtung gemäß einem der vorhergehenden Ansprüche, wobei der flexible Anzeigebildschirm (250) einer ist aus einem flexiblen Leuchtdioden-Bildschirm, einer flexiblen Flüssigkristallanzeige, einem flexiblen Substrat, auf dem mehr als ein Transistor angeordnet ist, und einer "elektronisches Papier"-Anzeige.

4. Die Benachrichtigungsvorrichtung gemäß einem der vorhergehenden Ansprüche, wobei der flexible Anzeigebildschirm (250) eine erste Leistungskonfiguration hat, die der ersten Position (2000) des flexiblen Anzeigebildschirms (250) entspricht und konfiguriert ist, nur einem Teil des flexiblen Anzeigebildschirms (250) mit Strom zu versorgen, und eine zweite Leistungskonfiguration, bei der eine Gesamtheit des flexiblen Anzeigebildschirms (250) mit Strom versorgt wird.

5. Die Benachrichtigungsvorrichtung gemäß einem der vorhergehenden Ansprüche, die weiter einen Klappenteil (217) aufweist mit einem ersten Ende, das mit dem Rückseitenteil (213) gekoppelt ist, und einem zweiten Ende, das lösbar mit dem Vorderseitenteil (207) gekoppelt ist, und wobei der flexible Anzeigebildschirm (250) konfiguriert ist, in dem Fall abgeschaltet zu werden, in dem der Klappenteil (217) ko-linear mit dem Rückseitenteil (213) positioniert ist.

6. Die Benachrichtigungsvorrichtung gemäß einem der vorhergehenden Ansprüche, wobei die Benachrichtigung (505) eine Zeit und einen Typ einer empfangenen Nachricht umfasst.

7. Die Benachrichtigungsvorrichtung gemäß einem der vorhergehenden Ansprüche, wobei die Benachrichtigung (505) eine Angabe über eine ungelesene Nachricht umfasst.

8. Die Benachrichtigungsvorrichtung gemäß einem der vorhergehenden Ansprüche, wobei der "elektronische Vorrichtung"-Koppler (300) einer aus einem Induktions-Koppler, einem leitenden Kontakt-Pad und einem USB-Konnektor ist.

9. Die Benachrichtigungsvorrichtung gemäß einem der vorhergehenden Ansprüche, wobei der "elektronische Vorrichtung"-Koppler (300) ein Lade-Pad ist, das mit einem des Vorderseitenteils (207), des Unterseitenteils (215), des linken Seitenteils (209), des rechten Seitenteils (211) und des Rückseitenteils (213) gekoppelt ist.

10. Die Benachrichtigungsvorrichtung gemäß einem der vorhergehenden Ansprüche, wobei der "elektronische Vorrichtung"-Koppler (300) zwei Koppler umfasst, von denen einer für Leistung und der andere für Daten vorgesehen ist.

11. Die Benachrichtigungsvorrichtung gemäß Anspruch 10, wobei:
der "elektronische Vorrichtung"-Koppler für Leistung einer aus einem Induktions-Koppler, einem leitenden Kontakt-Pad und einem USB-Konnektor ist; und
der "elektronische Vorrichtung"-Koppler für Daten einer aus einem Bluetooth-Konnektor, einem Wi-Fi-Konnektor und einem Nahfeldkommunikations-Konnektor ist.

12. Die Benachrichtigungsvorrichtung gemäß einem der Ansprüche 1 bis 4, die weiter einen Klappenteil (217) aufweist mit einem ersten Ende, das mit dem Rückseitenteil (213) gekoppelt ist, und einem zweiten Ende, das lösbar mit dem Vorderseitenteil (207) gekoppelt ist, und wobei der flexible Anzeigebildschirm (250) mehr als einen flexiblen Anzeigebildschirm aufweist, wobei einer der flexiblen Anzeigebildschirme (250) mit dem Klappenteil (217) gekoppelt ist und ein anderer der flexiblen Anzeigebildschirme mit einem des Vorderseitenteils (207), des Unterseitenteils (215), des linken Seitenteils (209), des rechten Seitenteils (211) und des Rückseitenteils (213) gekoppelt ist, wobei jeder der flexiblen Anzeigebildschirme konfiguriert ist zum Anzeigen zumindest einer aus einer Benachrichtigung (505) über einen Empfang einer Nachricht und einer Detailansicht (605) der Nachricht.

13. Die Benachrichtigungsvorrichtung gemäß einem der Ansprüche 1 bis 4, wobei die Benachrichtigungsvorrichtung weiter aufweist:
einen Klappenteil (217) mit einem ersten Ende, das mit dem Rückseitenteil (213) gekoppelt ist, und einem zweiten Ende (221), das lösbar mit dem Vorderseitenteil (207) gekoppelt ist, wobei
der flexible Anzeigebildschirm (250) mit dem Klappenteil (217) gekoppelt ist, und
der Klappenteil (217) zwischen der ersten Position (2000), in der der Klappenteil (217) mit sowohl dem Vorderseitenteil (207) als auch dem Rückseitenteil (213) gekoppelt ist, und der zweiten Position (6000) bewegbar ist, in der der Klappenteil (217) nur mit dem Rückseitenteil (213) gekoppelt ist und der Klappenteil einen Winkel mit dem Rückseitenteil (213) bildet.

## Revendications

1. Système de notification comprenant :
une partie d'enveloppe (205) ayant une partie latérale avant (207), une partie latérale inférieure (215), une partie latérale gauche (209), une partie latérale droite (211), et une partie latérale arrière (213) ;
un écran d'affichage souple (250) orienté vers l'extérieur couvrant une majeure partie de l'une parmi la partie latérale avant (207), la partie latérale inférieure (215), la partie latérale gauche (209), la partie latérale droite (211) et la partie latérale arrière (213) ;
un coupleur de dispositif électronique (300) configuré pour coupler électriquement l'écran d'affichage souple (250) au dispositif électronique (100) inséré dans la partie d'enveloppe (205), le coupleur de dispositif électronique (300) fournissant au moins l'une parmi la puissance et des données à l'écran d'affichage souple (250) du dispositif électronique (100), dans le cas où le dispositif électronique (100) se trouve dans la partie d'enveloppe (205) ; et
l'écran d'affichage souple (250) étant mobile entre une première position et une seconde position par rapport à la partie d'enveloppe, l'écran d'affiche souple (250) étant configuré pour :
afficher, lorsque l'écran d'affichage souple (250) est dans la première position (2000), une notification (505) de réception d'un message par le dispositif électronique (100) ; et
afficher, lorsque l'écran d'affichage souple (250) est dans la seconde position (6000), une vue détaillée (605) du message.

2. Dispositif de notification selon la revendication 1, dans lequel le coupleur de dispositif électronique (300) fournit à la fois la puissance et des données à l'écran d'affichage souple (250) du dispositif électronique (100).

3. Dispositif de notification selon l'une quelconque des revendications précédentes, dans lequel l'écran d'affichage souple (250) est l'un parmi un écran souple à diodes électroluminescentes, un écran souple à cristaux liquides, un substrat souple sur lequel sont placés plus d'un transistor, et un écran de papier électronique.

4. Dispositif de notification selon l'une quelconque des revendications précédentes, dans lequel l'écran d'affichage souple (250) a une première configuration de puissance correspondant à la première position (2000) de l'écran d'affichage souple (250) et configurée pour alimenter uniquement une partie de l'écran d'affichage souple (250) et une seconde configuration de puissance dans laquelle la totalité de l'écran d'affichage souple (250) est alimentée.

5. Dispositif de notification selon l'une quelconque des revendications précédentes, comprenant en outre une partie de volet (217) ayant une première extrémité couplée à la partie latérale arrière (213) et une seconde extrémité couplée de manière amovible à la partie latérale avant (207), et dans lequel l'écran d'affichage souple (250) est configuré pour être éteint dans le cas où la partie de volet (217) est positionnée de manière colinéaire avec la partie latérale arrière (213).

6. Dispositif de notification selon l'une quelconque des revendications précédentes, dans lequel la notification (505) comprend une heure et un type de message reçu.

7. Dispositif de notification selon l'une quelconque des revendications précédentes, dans lequel la notification (505) comprend une indication d'un message non lu.

8. Dispositif de notification selon l'une quelconque des revendications précédentes, dans lequel le coupleur de dispositif électronique (300) est l'un parmi un coupleur à induction, un plot de connexion conducteur et un connecteur USB.

9. Dispositif de notification selon l'une quelconque des revendications précédentes, dans lequel le coupleur de dispositif électronique (300) est un plot de charge couplé à l'une parmi la partie latérale avant (207), la partie latérale inférieure (215), la partie latérale gauche (209), la partie latérale droite (211) et la partie latérale arrière (213).

10. Dispositif de notification selon l'une quelconque des revendications précédentes, dans lequel le coupleur de dispositif électronique (300) comprend deux coupleurs, l'un pour la puissance et l'autre pour les données.

11. Dispositif de notification selon la revendication 10, dans lequel :
le coupleur de dispositif électronique pour la puissance est l'un parmi un coupleur à induction, un plot de connexion conducteur et un connecteur USB ; et
le coupleur de dispositif électronique pour les données est l'un parmi un connecteur Bluetooth, un connecteur Wi-fi et un connecteur de communication en champ proche.

12. Dispositif de notification selon l'une quelconque des revendications 1 à 4, comprenant en outre une partie de volet (217) ayant une première extrémité couplée à la partie latérale arrière (213) et une seconde extrémité couplée de manière amovible à la partie latérale avant (207), et dans lequel l'écran d'affichage souple (250) comprend plus d'un écran d'affichage souple, l'un des écrans d'affichage souples (250) étant couplé à la partie de volet (217) et l'autre des écrans d'affichage souples étant couplé à l'une parmi la partie latérale avant (207), la partie latérale inférieure (215), la partie latérale gauche (209), la partie latérale droite (211) et la partie latérale arrière (213), chacun des écrans d'affichage souples étant configuré pour afficher au moins l'une parmi une notification (505) de réception d'un message et une vue détaillée (605) du message.

13. Dispositif de notification selon l'une quelconque des revendications 1 à 4, le dispositif de notification comprenant en outre :
une partie de volet (217) ayant une première extrémité couplée à la partie latérale arrière (213) et une seconde extrémité (221) couplée de manière amovible à la partie latérale avant (207), dans lequel :
l'écran d'affichage souple (250) est couplé à la partie de volet (217), et
la partie de volet (217) est mobile entre la première position (2000) dans laquelle la partie de volet (217) est couplée à la fois à la partie latérale avant (207) et la partie latérale arrière (213) et la seconde position (6000) dans laquelle la partie de volet (217) est couplée uniquement à la partie latérale arrière (213) et la partie de volet forme un angle avec la partie latérale arrière (213).
